# EUROPEAN PATENT SPECIFICATION

(11) **EP 1 637 443 B1**
(45) Date of publication and mention of the grant of the patent: **03.01.2007**
(21) Application number: 04255704.1
(22) Date of filing: 20.09.2004
(51) Int. Cl.: B62J 39/00, A63H 23/10

(54) **Bottom base for a soft water-spouting toy**
Bodenplatte für ein weiches, wasserspritzendes Spielzeug
Partie de fond de jouet souple pour projeter de l'eau

(43) Date of publication of application: 22.03.2006
(73) Proprietor: Co-union Industry Co., Ltd., Yung Kang City, Tainan Hsien (TW)
(72) Inventor: Chen, Ming-Chang, Yung Kang City Tainan Hsien (TW)
(74) Representative: Fenlon, Christine Lesley

(56) References cited:
- CA-A- 2 263 737
- US-A- 3 677 446
- US-A- 4 209 113

## Description

### BACKGROUND OF THE INVENTION

### 1. Field of the Invention

This invention relates to a bottom base for a soft water spouting toy, particularly to one suitable for attachment to a child's bicycle or tricycle.

### 2. Description of the Prior Art

The document US 4209113 describes a water spouting toy mounted on a bicycle. This toy can be quickly detached from the bicycle but a stopper has to be removed in order to fill it.

### SUMMARY OF THE INVENTION

This invention has been devised to offer a bottom base for a soft water-spouting toy to be fixed on a child's bicycle or tricycle so as to be played with by a child to add more entertainment for spouting water when riding a bicycle or tricycle.

The feature of the invention is provision of a base consisting of an upper combining base and a lower fixing base threadably combined with the upper combining base. The combining base is to be tightly combined with a soft water-spouting toy, and the fixing base is to be fixed stably on a handle of a bicycle or tricycle.

The combining base is provided with a hole, preferably a lengthwise center hole, desirably shaped at its lower end portion as a semicircle (hemisphere). The lower end portion is preferably formed with a small aperture. An upper end portion of the hole is preferably closed by a grid cap. A sinkable ball is placed in the hole for sinking down to block up the small aperture. The upper combining base and the lower fixing base may be threadably combined with engagement of male threads and female threads.

In order to fill the soft water-spouting toy with water, the upper combining base combined with the water-spouting toy may be disengaged from the lower fixing base fixed on the handle of a bicycle or tricycle and then turned upside down, whereby the ball in the hole falls down on the grid cap. Then water can be poured through the grid cap and the hole into the interior of the water-spouting toy. After the interior of the toy and the base are filled full with water, the upper combining base together with the toy is once again turned upside down and threadably combined with the lower fixing base again, with the ball blocking the lower small aperture to prevent the water inside from leaking out.

The assembling and disassembling of the upper combining base and the lower fixing base may be effected by a female connecting member provided with the upper combining base and a male connecting member provided with the lower fixing base.

Further, a frustum-shaped portion may be provided on top of the male connecting member of the fixing base to closely contact the aperture of the hole for assisting prevention of water leakage from the aperture.

### BRIEF DESCRIPTION OF DRAWINGS

This invention will be better understood by referring to the accompanying drawings, wherein:
Figure 1 is a cross-sectional view of a first embodiment of a bottom base for a soft water-spouting toy in the present invention;
Figure 2 is an exploded perspective view of the first embodiment of a bottom base for a soft water-spouting toy in the present invention;
Figure 3 is an inverted cross-sectional view of a combining base of the first embodiment in the present invention;
Figure 4 is a perspective view of the combining base of a second embodiment of a bottom base for a soft water-spouting toy in the present invention;
Figure 5 is an inverted cross-sectional view of the second embodiment of a bottom base for a soft water-spouting toy in the present invention;
Figure 6 is a side view of a fixing base of the first embodiment in the present invention; and,
Figure 7 is an inverted cross-sectional view of a combining base of the second embodiment in the present invention.

### DETAILED DESCRIPTION OF THE PREFERRED EMBODIMENTS

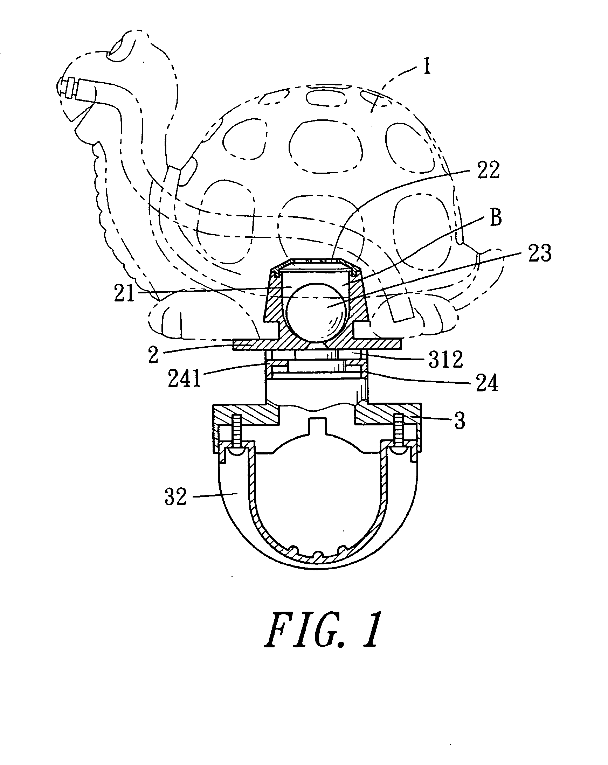

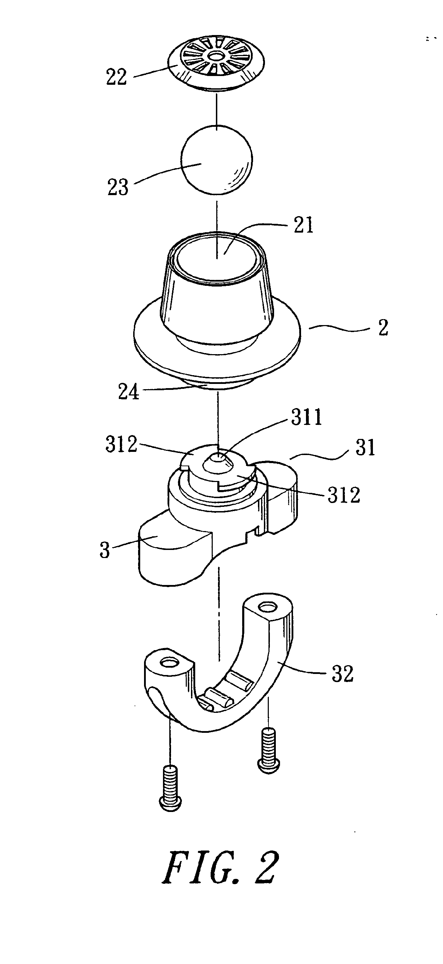

A first embodiment of a bottom base for a soft water-spouting toy 1 in the present invention, as shown in Figs. 1 and 2, includes an upper combining base 2, and a lower fixing base 3 as main components.

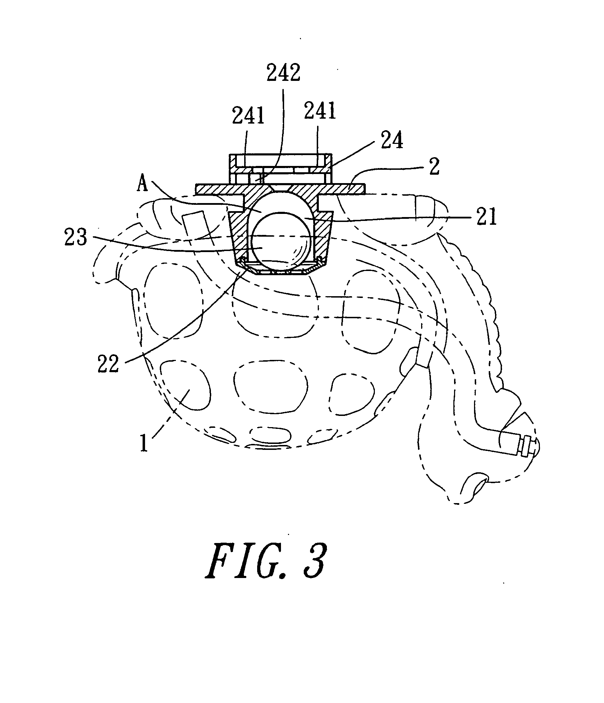

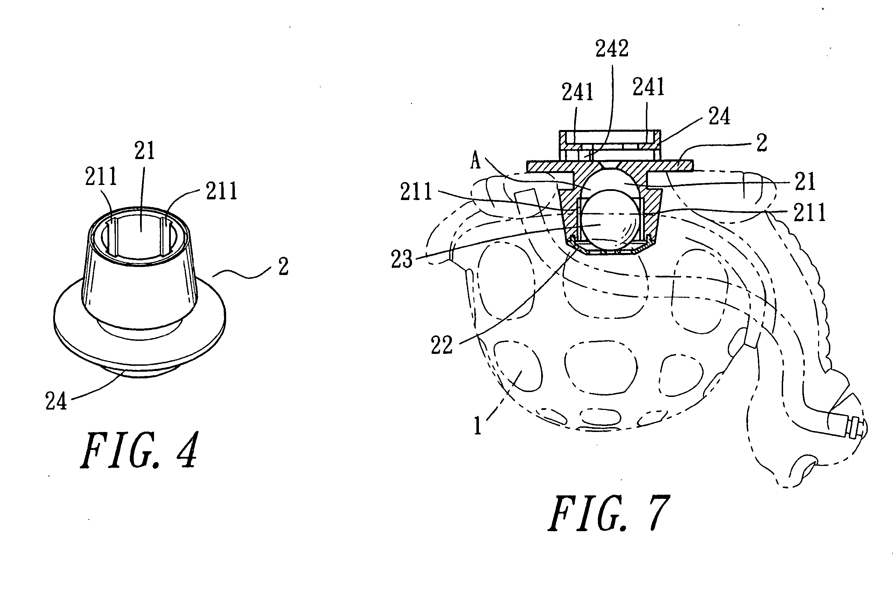

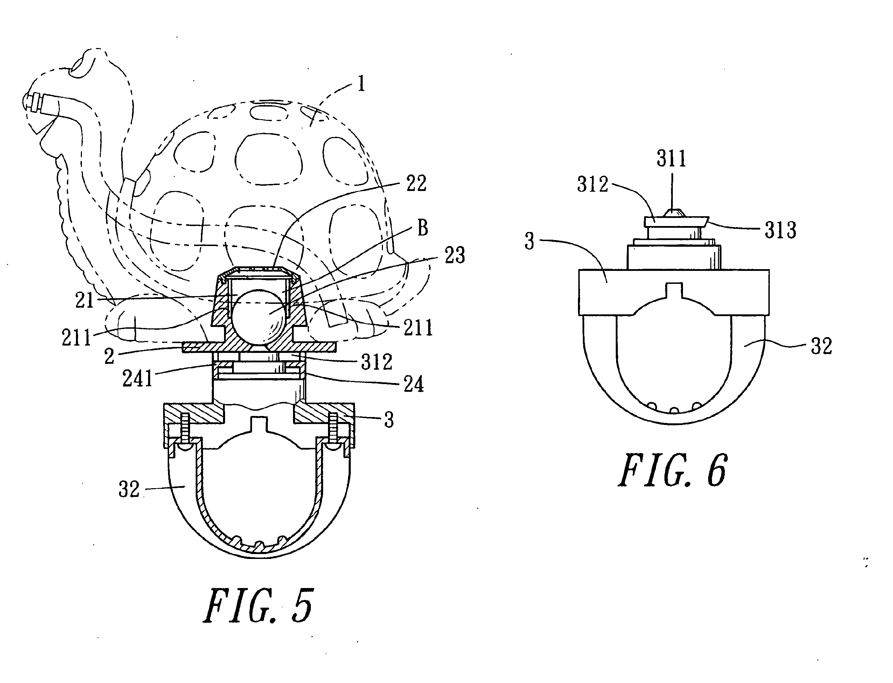

The upper combining base 2 is provided with a lengthwise center hole 21 in the center of its upper surface, with its lower end (A) curved as a semicircle to have a small hole as shown in Fig. 3, a grid cap 22 closed up an upper end (B), and a ball 23 sinking down in the hole 21. The lengthwise center hole 21 is defined by an annular wall, which is provided with a plurality of lengthwise grooves 211 spaced apart equidistantly for enabling water to flow more quickly in the center hole 21, as shown in Figs. 4 and 5. Further, the upper combining base 2 has a female connecting member 24 formed in a lower portion, and an annular flat rail 241 extending inward from its inner surface as shown in Fig. 3, and a terminal point 242 formed at the end of the flat rail 241.

The lower fixing base 3 is provided with a male connecting member 31 formed in an upper portion, a frustum 311 fixed on the center of an upper surface of the male connecting member 31, a flat disc 312 formed under the frustum 311 and having an inclined vertical side 313, as shown in Fig. 6. Further the combining base 3 has a U-shaped fixer 32 threadably fixed under the fixing base 3.

Next, the upper combining base 2 and the lower fixing base 3 are threadably combined with each other by engaging of the female connecting member 24 with the male connecting member 31. The inclined vertical face 313 of the flat disc 312 can guide the same disc 312 to glide smoothly along the upper side of the annular flat rail 241 1 and to be stopped by the terminal point 242 in the combined condition. At the same time, the frustum 311 forcefully pushes up against the lower mouth of the hole 21 of the combining base 2 to assist to prevent water from leaking out.

In order to fill water in the soft water-spouting toy 1, as shown in Figs. 3 and 7, the soft water-spouting toy together with the upper combining base 2 threadably disengaged from the lower fixing base is first inverted upside down, then water can be poured in the center hole 21 through the female connecting member 24, with the ball 23 sinking on the upper end (B) of the center hole 21, never interfering with water flowing. After water is poured to fill up the interior of the soft water-spouting toy 1 and the bottom base, then the inverted toy with the bottom base is once again turned again upside down, letting the ball 23 fall down to the lower end (A) of the center hole 21, blocking the water therein from leaking out.

While the preferred embodiments of the invention have been described above, and it will be recognized and understood the various modifications may be made therein and the appended claims are intended to cover all such modifications that may fall within the scope of the invention.

## Claims

1. A bottom base for a soft water-spouting toy (1) comprising an upper combining base (2) and a lower fixing base (3):
Said lower fixing base (3) adapted to be fixed stably on a handle of a child's bicycle or tricycle having an upper male connecting member (24): and,
Said upper combining base (2), adapted to be fixed to the toy (1), having a female connecting member (24) formed in a lower portion and a lengthwise center hole (21) formed in the center of an upper surface, said lengthwise center hole (21) having its lower end portion becoming hemispherical with a small hole, an upper grid cap (22) closing up an upper open end (B), a sinkable ball (23) placed in said lengthwise center hole (21), said upper combining base (2) threadably engaging with or disengaging from said lower fixing base (3) by engagement or disengagement of said male connecting member (31) of said lower fixing base with or from said female connecting member (24) of said upper combining base (2).

2. The bottom base for a soft water-spouting toy (1) as claimed in Claim 1, wherein said lengthwise center hole (21) of said upper combining base (2) is defined by an annular wall (21), which is provided with a plurality of lengthwise grooves (211) spaced apart equidistantly.

3. The bottom base for a soft water-spouting toy (1) as claimed in Claim 1, wherein said lower fixing base (3) further has a frustum (311) on the center of an upper surface of said male connecting member (31), and said frustum (311) forcefully closes up the small hole of a lower end of said lengthwise center hole (21) after said upper combining base (2) is threadably combined with said fixing base (3).

4. The bottom base for a soft water-spouting toy (1) as claimed in Claim 2, wherein said lower fixing base (3) further has a frustum (311) on the center of an upper surface of said male connecting member (31), and said frustum forcefully closes up the small hole of a lower end of said lengthwise center hole (21) after said upper combining base (2) is threadably combined with said fixing base (3).

## Patentansprüche

1. Bodenbasis für ein weiches Wasserspritz-Spielzeug (1), umfassend eine obere Vereinigungs-Basis (2) und eine untere Befestigungs-Basis (3),
wobei:
die untere Befestigungsbasis (3), die so angepasst ist, dass sie stabil am Lenker eines Kinder-Fahrrads oder -Dreirads befestigt wird, ein oberes Steckverbindungsbauteil (31) aufweist; und
die obere Vereinigungsbasis (2), die so angepasst ist, dass sie an dem Spielzeug (1) befestigt wird, aufweist ein in einem unteren Abschnitt herausgearbeitetes Buchsenverbindungsbauteil (24), und ein in der Mitte einer oberen Oberfläche herausgearbeitetes längsgerichtetes Mittelloch (21), wobei das längsgerichtete Mittelloch (21) an seinem unteren Endabschnitt zu einer Halbkugel mit einem kleinen Loch wird, eine obere Gitterkappe (22), die ein oberes offenes Ende (8) zuschließt, einen sinkfähigen Ball (23), der sich in dem längsgerichteten Mittelloch (21) befindet, wobei die obere Vereinigungs-Basis (2) auf die untere Befestigungsbasis (3) festgeschraubt oder wieder davon gelöst werden kann, durch Festhalten oder Lösen des Steckverbindungsbauteils (31) der unteren Befestigungsbasis an dem bzw. von dem Buchsenverbindungsbauteil (24) der oberen Vereinigungsbasis (2)

2. Bodenbasis für ein weiches Wasserspritz-Spielzeug nach Anspruch 1, wobei das längsgerichtete Mittelloch (21) der oberen Vereinigungsbasis (2) umgrenzt ist von einer ringförmigen Wand (21) mit einer Anzahl von längsgerichteten Rillen (211), die einen gleichen Abstand zueinander aufweisen.

3. Bodenbasis für ein weiches Wasserspielzeug (1) nach Anspruch 1, wobei die untere Befestigungsbasis (3) zudem einen Kegelstumpf (311) inmitten einer oberen Oberfläche des Steckverbindungsbauteils (31) aufweist, und der Kegelstumpf (311) das kleine Loch eines unteren Endes des längsgerichteten Mittellochs (21) kräftig schließt, nachdem die obere Vereinigungsbasis (2) mit der Befestigungsbasis (3) verschraubt worden ist.

4. Bodenbasis für ein weiches Wasserspielzeug (1) nach Anspruch 2, wobei die untere Befestigungsbasis (3) zudem einen Kegelstumpf (311) inmitten einer oberen Oberfläche des Steckverbindungsbauteils (31) aufweist, und der Kegelstumpf (311) das kleine Loch eines unteren Endes des längsgerichteten Mittellochs (21) kräftig schließt, nachdem die obere Vereinigungsbasis (2) mit der Befestigungsbasis (3) verschraubt worden ist.

## Revendications

1. Partie de fond pour jouet souple projetant de l'eau (1) comprenant une partie supérieure d'association (2) et une partie inférieure de fixation (3) :
ladite partie inférieure de fixation (3) étant adaptée pour être fixée de manière stable sur une poignée d'une bicyclette ou d'un tricycle d'enfant ayant un élément d'assemblage supérieur mâle (24) ; et
ladite partie supérieure d'association (2), adaptée pour être fixée au jouet (1), ayant un élément d'assemblage femelle (24) formé dans une partie inférieure et un trou central dans le sens de la longueur (21) formé au centre d'une surface supérieure, la partie d'extrémité inférieure dudit trou central dans le sens de la longueur (21) devenant hémisphérique avec un petit trou, un chapeau supérieur ajouré (22) fermant une extrémité supérieure ouverte (B), une bille plongeante (23) placée dans ledit trou central dans le sens de la longueur (21), ladite partie supérieure d'association (2) pouvant être vissée avec ladite partie inférieure de fixation (3) par mise en prise dudit élément d'assemblage mâle (31) de ladite partie inférieure de fixation avec ledit élément d'assemblage femelle (24) de ladite partie supérieure d'association (2).

2. Partie de fond pour jouet souple projetant de l'eau (1) selon la revendication 1, dans laquelle ledit trou central dans le sens de la longueur (21) de ladite partie supérieure d'association (2) est défini par une paroi annulaire (21) qui est pourvue d'une pluralité de rainures disposées dans le sens de la longueur (211) séparées à intervalle régulier.

3. Partie de fond pour jouet souple projetant de l'eau (1) selon la revendication 1, dans laquelle ladite partie inférieure de fixation (3) comporte en outre un tronc de cône (311) au centre d'une surface supérieure dudit élément d'assemblage mâle (31), et ledit tronc de cône (311) ferme de manière forcée le petit trou d'une extrémité inférieure dudit trou central dans le sens de la longueur (21) après que ladite partie supérieure d'association (2) a été associée par vissage à ladite partie de fixation (3).

4. Partie de fond pour jouet souple projetant de l'eau (1) selon la revendication 2, dans laquelle ladite partie inférieure de fixation (3) comporte en outre un tronc de cône (311) au centre d'une surface supérieure dudit élément d'assemblage mâle (31), et ledit tronc de cône ferme de manière forcée le petit trou d'une extrémité inférieure dudit trou central dans le sens de la longueur (21) après que ladite partie supérieure d'association (2) a été associée par vissage à ladite partie de fixation (3).
